# EUROPÄISCHE PATENTANMELDUNG

(11) **EP 1 084 880 A2**
(43) Veröffentlichungstag der Anmeldung: **21.03.2001**
(21) Anmeldenummer: 00119649.2
(22) Anmeldetag: 08.09.2000
(51) Int. Cl.: B60J 7/047

(54) **Fahrzeugdach mit wenigstens zwei in einer gemeinsamen Dachöffnung angeordneten Deckeln**

(30) Priorität: 20.09.1999 DE 19953104
(71) Anmelder: Webasto Vehicle Systems International GmbH, 82131 Stockdorf (DE)
(72) Erfinder: Schwarz, Markus, 79822 Titisee-Neustadt (DE); Reinsch, Burkhard, 87600 Kaufbeuren (DE); Wienchol, Otto, 82059 Hohenschäftlarn (DE)
(74) Vertreter: Wiese, Gerhard

(57) **Zusammenfassung**

Fahrzeugdach mit einer in einer festen Dachhaut (1) ausgebildeten Dachöffnung (2), in welcher wenigstens zwei Deckel (3, 4) in einer die Dachöffnung (2) verschließenden Schließstellung bündig hintereinander angeordnet und in eine die Dachöffnung (2) teilweise freigebende Öffnungsstellung in Fahrzeuglängsrichtung einander überlappend verschiebbar sind, in welcher Stellung der in Fahrtrichtung hintere Deckel (4) zumindest teilweise unter dem vorderen Deckel (3) zu liegen kommt. Erfindungsgemäß ist vorgesehen, daß jeweils nur einer von zwei benachbarten, durch eine gemeinsame Mechanik betätigbaren Deckeln (3, 4) bei feststehendem anderen Deckel (4 bzw. 3) verschiebbar ist.

## Beschreibung

Die Erfindung bezieht sich auf ein Fahrzeugdach mit wenigstens einer in einer festen Dachhaut ausgebildeten Dachöffnung, in welcher wenigstens zwei Deckel in einer die Dachöffnung verschließenden Schließstellung bündig hinter einander angeordnet und in eine die Dachöffnung teilweise frei gebende erste Öffnungsstellung einander zumindestens teilweise überlappend verschiebbar sind, in welcher ersten Stellung wenigstens einer von zwei benachbarten Deckeln zumindest teilweise unter dem anderen Deckel zu liegen kommt.

Bei einem bekannten Fahrzeugdach dieser Art mit zwei Deckeln (WO96/26081A) ist vorgesehen, dass beide Deckel zum Öffnen oder Verschließen der Dachöffnung verschiebbar sind, wobei der in Fahrtrichtung hinten gelegene Deckel unter den vorderen Deckel fährt, wenn letzterer geöffnet werden soll. Ein weiteres Beispiel für ein derartiges Fahrzeugdach ist aus der GB-437 589 A bekannt. Bei dieser Konstruktion wird der vordere Deckel vom hinteren Deckel aufgenommen bzw. der hintere Deckel umgreift den vorderen Deckel taschenförmig. Aufgrund dieser Anordnung ist kein glattflächiges Erscheinungsbild des Daches möglich.

Der Erfindung liegt die Aufgabe zugrunde, ein Fahrzeugdach der eingangs genannten Art zu schaffen, dessen Deckel eine variable Dachöffnung ermöglichen und durch einen einfach gestalteten Antriebsmechanismus verstellbar sind.

Diese Aufgabe wird durch die im Patentanspruch 1 angegebenen Mittel gelöst. Vorteilhafte Ausgestaltungen der Erfindung sind den Unteransprüchen zu entnehmen.

Im Gegensatz zum eingangs beschriebenen Stand der Technik beschreitet die vorliegende Erfindung einen vollständig anderen Weg, gemäß dem von zwei benachbarten Deckeln stets nur einer der beiden Deckel verstellbar ist, wobei der zu verstehende Deckel jeweils unter den benachbarten, jeweilig feststehenden Deckel gefahren wird, und wobei vorzugsweise für die wechselweise Verstellung zweier benachbarter Deckel ein gemeinsamer Mechanismus verwendet wird.

Gemäß einer vorteilhaften Weiterbildung der Erfindung verbleibt jeweils der wahlweise feststehende, nicht verschobene Deckel zu Beginn der Verschiebung des anderen Deckels im Bereich der aneinanderstoßenden Kanten mit seiner Kante in der geschlossenen oder hochgestellten Position, woraufhin der zu verstellende Deckel mit seiner entsprechenden Kante abgesenkt und unter den feststehenden Deckel gefahren wird.

Das erfindungsgemäß ausgebildete Fahrzeugdach läßt deshalb einen gemeinsamen Antriebsmechanismus für jeweils zwei benachbarte Deckel zu. Gemäß einer vorteilhaften Ausbildung ist dabei vorgesehen, dass jeder Deckel im Bereich seiner vom anderen Deckel in Schließstellung entfernt liegenden Querkante in zwei seitlichen Führungsschienen im Bereich der Dachöffnungslängsseiten schwenkbar geführt ist, dass jeder Deckel im Bereich seiner anderen, aufeinander zuweisenden Querkante pro Führungsschiene in einer einen Teil des Antriebsmechanismus bildenden, für beide Deckel gemeinsamen Schiebekulisse zur gegenläufigen Hubverstellung dieser Querkantenbereich relativ zu einander geführt ist, und dass eine ebenfalls Teil des Antriebsmechanismus bildende Verschiebeeinrichtung für den aus der Schiebekulisse frei kommenden, abgesenkten Deckel vorgesehen ist, um diesen unter den angehobenen oder in geschlossener Position verharrenden Deckel zu verschieben. Mit anderen Worten hat der Antriebsmechanismus optional einen ersten Teil zum Anheben des feststehenden Deckels im Bereich von dessen dem anderen Deckel zugewandten Kante, und einen zweiten Teil zum Absenken des zu verschiebenden Deckels, welcher, sobald er vollständig abgesenkt ist, mittels einer Verschiebeeinrichtung in eine beliebige Position unter den feststehenden Deckel geschoben werden kann.

Vorteilhafterweise weist die Schiebekulisse zu ihrer Längsmitte hin ansteigend verlaufende Führungsnuten auf, in welche Führungsbolzen eingreifen, die im Bereich der hubverstellbaren Querkanten der Deckel an diesen angebracht sind. Bevorzugt haben die Führungsnuten im Wesentlichen einen S-förmigen Verlauf, wobei die Führungsbolzen bei sich in Schließstellung befindlichen im oberen Bereich der Führungsnuten liegen oder bei einer alternativen Ausführungsform Deckeln im Bereich der ansteigenden Abschnitte der Führungsnuten zu liegen kommen.

Jeder Führungsnut der Schiebekulisse ist eine fest mit der Führungsschiene verbundene Steigkulisse mit einer im Wesentlichen vertikalen und zur Verschiebeeinrichtung hin offenen Steignut zugeordnet.

Ferner ist vorteilhafterweise die Verschiebeeinrichtung pro Deckel mit einem fest mit einem Antriebskabel verbundenen Schlitten mit einer Mitnahmemulde für den jeweiligen Führungsbolzen versehen. Um die Übergabe des Führungsbolzens aus der Führungsnut der Schiebekulisse bzw. der Steignut der Steigkulisse in die Mitnahmemulde des Schlittens problemlos und sicher zu gestalten, ist außerdem vorteilhafterweise eine entsprechende Übergabeeinrichtung vorgesehen. Gemäß einer ersten Ausführungsform umfaßt die Übergabeeinrichtung eine parallel zum Führungsbolzen verschwenkbar an der Verschiebeeinrichtung angelenkte Gabel, in welche der Führungsbolzen eingreift, bevor er die Führungsnut der Schiebekulisse bzw. die Steignut der Steigkulisse verläßt. Die Gabel führt bei der Übergabe den Führungsbolzen und sichert diesen auch dann, wenn er von der Verschiebeeinrichtung aufgenommen ist. Gemäß einer zweiten vorteilhaften Ausführungsform weist die Übergabeeinrichtung ein Hubelement auf, das den die Führungsnut der Schiebekulisse bzw. die Steignut der Steigkulisse verlassenden Führungsbolzen abstützt und sich zur Übergabe des Führungsbolzens auf die Mitnahmemulde der Verschiebeeinrichtung unter diese Mulde gesteuert durch eine Hubkulisse absenkt, welche durch Nuten in der Schiebekulisse betätigt ist.

Außerdem ist vorteilhaft eine Kupplungseinrichtung vorgesehen, um die Schiebekulisse im aktiven Zustand, in welchem sie in Kontakt mit dem zu verschiebenden Deckel steht, mit der Verschiebeeinrichtung und in ihrem Passivzustand, in welchem sie von diesem Deckel getrennt ist, mit der Führungsschiene zu koppeln. Bevorzugt ist die Kupplungseinrichtung als Riegelsteinmechanik aufgebaut.

Nachfolgend wird die Erfindung anhand der Zeichnung beispielhaft näher erläutert; es zeigen:
- Fig. 1: schematisch den oberen Teil einer Fahrzeugkarosserie mit zwei in einer gemeinsamen Dachöffnung angeordneten Deckeln und einer Führungsschiene für diese,
- Fig. 2 und 3: Explosionsansichten einer ersten Ausführungsform des für die beiden Deckel von Fig. 1 vorgesehenen gemeinsamen Antriebsmechanismus, wobei Fig. 2 die Führungsschiene und die Steigkulisse zeigt, während Fig. 3 die Verschiebeeinrichtung für die Steigkulisse und die beiden Deckel dargestellt,
- Fig. 4 und 5: Explosionsansichten einer zweiten Ausführungsform des für die beiden Deckel von Fig. 1 vorgesehenen gemeinsamen Antriebsmechanismus, wobei Fig. 4 die Führungsschiene und die Steigkulisse und Fig. 5 die Verschiebeeinrichtung für die Steigkulisse und die beiden Deckel zeigt,
- Fig. 6 und 7: schematisch den Riegelsteinmechanismus zum Festsetzen/Freigeben der Steigkulisse in bezug auf die Verschiebeeinrichtung, wobei Fig. 6 schematisch eine perspektivische Darstellung des Riegelsteinmechanismus und Fig. 7 eine Schnittdarstellung dieses Riegelsteinmechanismus zeigt.
- Fig. 8 a-e: eine Variante mit vier Deckeln in verschiedenen Positionen zur Freigabe verschiedener Dachöffnungen, und
- Fig. 9: eine schematische Darstellung zur Verdeutlichung des Mechanismus gemäß Fig. 2 und 3.

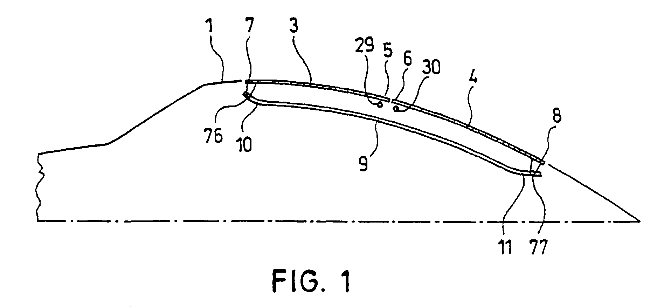

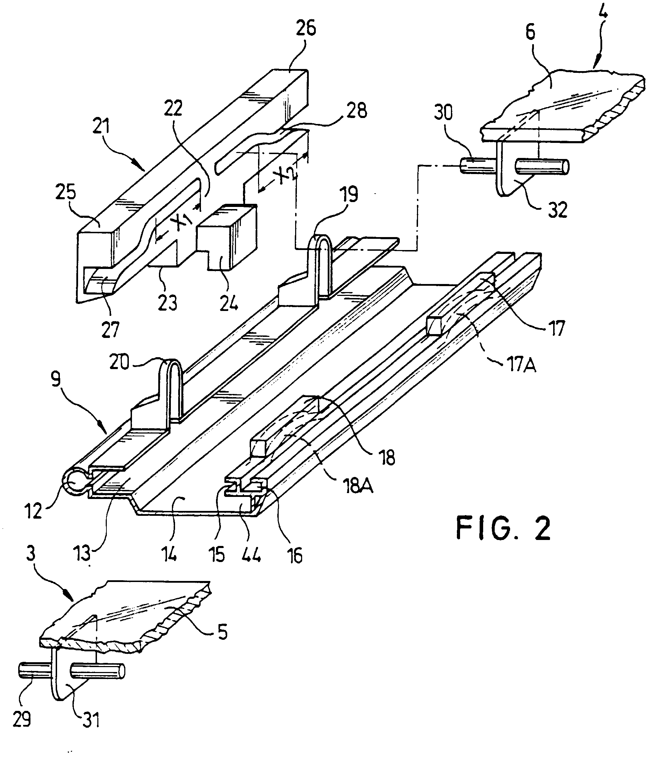

Wie in Fig. 1 gezeigt, hat die Dachhaut 1 eines Fahrzeugdachs eine Dachöffnung 2, in welche in Schließstellung zwei Deckel 3 und 4 bündig hintereinander angeordnet eingesetzt sind, wobei auf die Fahrtrichtung bezogen, der Deckel 3 vorn und der Deckel 4 hinten liegt. In der in Fig. 1 gezeigten Schließstellung grenzt der vordere Deckel 3 mit seiner hinteren Kante 5 an die vordere Kante 6 des hinteren Deckels 4 an, während die vordere Kante 7 des vorderen Deckels 3 und die hintere Kante 8 des hinteren Deckels 4 ebenso bündig in die Dachhaut übergehen wie die in Fig. 1 nicht näher bezeichneten seitlichen Kanten des vorderen Deckels 3 und des hinteren Deckels 4. Geführt sind die beiden Deckel 3 und 4 in beidseits der Dachöffnung 2 unterhalb von dieser verlaufenden Führungsschienen 9, von welchen in Fig. 1 lediglich eine Führungsschiene 9 angedeutet ist. Die Führung der beiden Deckel 2 und 3 in der jeweiligen Führungsschiene 9 erfolgt mittels eines gemeinsamen nachfolgend anhand von Fig. 2 bis 5 erläuterten Antriebsmechanismus.

Die Führungsschiene 9 hat am auf die Fahrtrichtung bezogenen vorderen Ende eine Endkulisse 10 und am diesbezüglichen hinteren Ende eine Endkulisse 11. In den noch oben gebogenen Endkulissen 10 bzw. 11 sind ein vorderer Führungsbolzen 76 des vorderen Deckels 3 bzw. ein hinterer Führungsbolzen 77 des hinteren Deckels 4 schwenkbar und verschiebbar gelagert. Der Führungsbolzen 76 ermöglicht somit eine Schwenkbewegung des vorderen Deckels 3 mit seiner hinteren Kante 5; bei einer Absenkung des vorderen Deckels 3 im Bereich der hinteren Kante 5 und einer nachfolgenden Verschiebung des vorderen Deckels 3 nach hinten sorgt die nach unten gebogene Endkulisse 10 dafür, dass auch die Vorderkante 7 des vorderen Deckels 3 absenkt, so dass der vordere Deckel 3 vollständig unter den hinteren Deckel 4 verschoben werden kann.

Der Führungsbolzen 77 ermöglicht eine Schwenkbewegung des hinteren Deckels 4 mit seiner vorderen Kante 6; bei einer Absenkung des hinteren Deckels 4 im Bereich der vorderen Kante 6 und einer nachfolgenden Verschiebung des hinteren Deckels 4 nach vorn sorgt die nach unten gebogene Endkulisse 11 dafür, dass auch die Hinterkante 8 des hinteren Deckels 4 absenkt, sodass der hintere Deckel 4 vollständig unter den vorderen Deckel 3 verschoben werden kann.

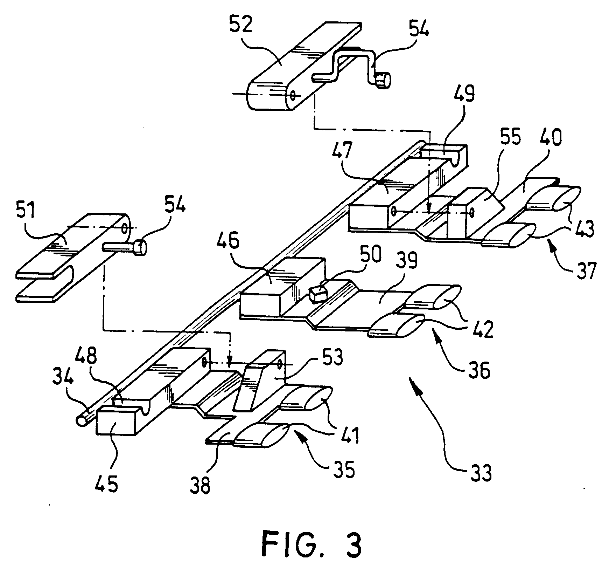

Anhand von Fig. 2 und 3 wird nunmehr eine erste Ausführungsform des erfindungsgemäß vorgesehenen gemeinsamen Antriebsmechanismus für die Deckel 3 und 4 erläutert.

Wie in Fig. 2 gezeigt, ist die Führungsschiene 9 als längliches Profilteil ausgebildet und enthält folgende Führungsabschnitte: Einen bezogen auf die Dachöffnung 2 außengelegenen Kabelführungskanal 12 kreisförmigen Querschnitts, der schlitzförmig geöffnet ist, und einen sich einwärts an den Kabelführungskanal 12 anschließenden Schlittenführungskanal 13, der ebenfalls einwärts offen ist und einen U-förmigen Querschnitt aufweist, einen sich an den Schlittenführungskanal 13 anschließenden tieferliegenden Führungsschienenboden 14. Gegenüber dem offenen Seitenrand des Schlittenführungskanals 13, erhöht über dem Führungsboden 14 liegend, schließen zwei seitlich zueinander versetzte, in Richtung auf den Schlittenführungskanal 13 offene Kanäle U-förmigen Querschnitts anschließen, von denen der eine, näher zum Schlittenführungskanal 13 liegende Kanal einen nachfolgend näher erläuterten ersten Ausstellerführungskanal 15 bildet, während der andere Kanal einen zweiten Ausstellerführungskanal 16 bildet. Beide Ausstellerführungskanäle 15 und 16 liegen über einem Gleitschuh- Führungskanal 44, der wie der etwas höhenversetzt dazu gegenüber liegende Schlittenführungskanal 13 der Führung einer insgesamt mit 33 bezeichneten Verschiebeeinrichtung dient. Die Funktion der Führungskanäle 12 und 13 bzw. 15 und 16 ist nachfolgend näher erläutert.

Auf den die ersten und zweiten Austellerführungskanäle 15 bzw. 16 bildenden Führungsschienenabschnitten U-förmigen Querschnitts sind in Längsrichtung der Führungsschienen 9 von einander beabstandet eine erste Hubkulisse 17 und eine zweite Hubkulisse 18 fest angebracht, die in der dargestellten Ausführungsform länglich quaderförmig gebildet sind. In den Hubkulissen 17 bzw. 18 sind ― wie in Fig. 2 gestrichelt angedeutet ― nach oben gewölbte Kulissenbahnen 17A bzw. 18A ausgebildet, die die Ausstellerführungskanäle in diesen Bereichen ersetzen. In derselben Längsposition wie die erste Hubkulisse 17 und die zweite Hubkulisse 18 befinden sich gegenüberliegend auf dem den Schlittenführungskanal 13 festlegenden Profilabschnitt eine erste Steigkulisse 19 und eine zweite Steigkulisse 20. Diese Steigkulissen sind als allgemein U-förmige, oben geschlossen und unten offene, in den Führungskanal 13 mündende Führungsteile gebildet.

Eine Schiebekulisse ist in Fig. 2 allgemein mit der Bezugsziffer 21 bezeichnet. Die Schiebekulisse 21 bildet ein in ihrer Grundform quaderförmiges Teil mit einem angeformten Gleitblock 22, der in der Längsmitte der Schiebekulisse 21 angeordnet ist und auf der Unterseite eine Gleitfläche 23 aufweist, die dazu bestimmt ist, auf der Oberseite des den Schlittenführungskanal 13 festlegenden Profilteils der Führungsschiene 9 im Gleiteingriff zu stehen, wobei die Gleitstrecke in Führungsschienenlängsrichtung durch den gegenseitigen Abstand der beiden Steigkulissen 19 und 20 und den demgegenüber kürzeren gegenseitigen Abstand der Stirnseiten des Gleitblocks 22 bestimmt ist. Angetrieben wird die Schiebekulisse 21 mittels eines nachfolgend erläuterten, im Kabelführungskanal 12 laufenden Antriebskabels 34, und zwar mittels eines Antriebblocks 24, der seitlich einwärts vorspringend sowie zusätzlich sich abwärts erstreckend fest mit dem Gleitblock 22 verbunden ist und in Eingriff mit einem nachfolgend erläuterten am Antriebskabel 34 befestigten Schlitten bringbar ist.

Spiegelsymmetrisch ausgebildet zur Mitte der Schiebekulisse 21, sind in den sich beidseits an den Gleitblock 22 anschließenden Enden 25 und 26 der Schiebekulisse 21 der Führungsschienenmitte zugewandt Führungsnuten 27 bzw. 28 ausgebildet. Im folgenden sind bezogen auf die Fahrtrichtung das Schiebekulissenende 25 als vorderes Schiebekulissenende, das Schiebekulissenende 26 als hinteres Schiebekulissenende, die Führungsnut im vorderen Schiebekulissenende 25 als vordere Führungsnut 27 und die Führungsnut in der hinteren Schiebekulisse 26 als hintere Führungsnut 28 bezeichnet. Die Führungsnuten 27 und 28 münden in die Stirnseiten der Schiebekulissenenden 25 bzw. 26 offen aus und verlaufen ausgehend von diesen in Richtung auf den zentralen Gleitblock 22 ansteigend unter Bildung einer allgemein S-förmigen Führungsbahn. Das heißt, ausgehend von besagten Stirnseiten haben die Führungsnuten 27 und 28 bzw. die durch sie festgelegten Führungsbahnen zunächst einen mit Einführungsschrägen erweiterten Abschnitt als Einführtrichter, gefolgt von einem im Wesentlichen horizontal verlaufenden unteren Abschnitt, auf welchen wiederum ein rampenförmig ansteigender Abschnitt folgt, an den sich zur Mitte der Schiebekulisse 21 ein im Wesentlichen horizontal verlaufender oberer Abschnitt ausschließt. Die Führungsnuten 27 und 28 dienen zur Führung von Führungsbolzen 29 bzw. 30, die an der Unterseite des vorderen Deckels 3 bzw. des hinteren Deckels 4 vorgesehen sind. Im einzelnen erstreckt sich der Führungsbolzen 29 quer bzw. senkrecht zur Längserstreckung der Führungsschiene 9 auf der Unterseite im Bereich der hinteren Kante 5 des vorderen Deckels 3 mit Abstand von dessen Unterseite. Er ist dort durch eine Halterungslasche 31 befestigt. Ähnlich ist der Führungsbolzen 30 im Bereich der vorderen Kante 6 des hinteren Deckels 4 von dessen Unterseite vorstehend sowie quer zur Längserstreckungsrichtung der Führungsschiene 9 verlaufend mittels einer Halterungslasche 32 befestigt.

Wenn sich der vordere Deckel 3 und der hintere Deckel 4 gemeinsam in der die Dachöffnung 2 verschließenden, in Fig. 1 schematisch gezeigten Schließstellung befinden, durchgreifen die Führungsbolzen 29 bzw. 30 die Steigkulissen 19 bzw. 20 und liegen in den horizontal verlaufenden oberen Abschnitten der Führungsnuten 27 bzw. 28 und zwar so, dass die Führungsbolzen 29 bzw. 30 jeweils einen Leerweg bei einer Absenkbewegung des jeweils benachbarten Deckels durchlaufen können. Gemäß einer alternativen Ausführungsform liegen die Führungsbolzen 29 bzw. 30 etwa auf halber Erstreckungslänge der Führungsnuten 27 bzw. 28 im Wendepunkt von deren S-förmigem Verlauf bzw. in deren zentralen schräg verlaufendem Abschnitt, so dass bei einem Absenken eines der Deckel 3 bzw. 4 der jeweils benachbarte Deckel 4 bzw, 3 gleichzeitig eine Anhebebewegung ausführt. Die horizontalen oberen Abschnitte der Führungsnuten 27 bzw. 28 haben eine Länge X₁, die etwas größer ist, als die Länge X₂ des schräg verlaufenden Abschnitts und des unteren horizontalen Abschnitts.

Bevor die Schiebeverstellung der Deckel 3 und 4 ausgehend von der vorstehend angeführten Deckel-Schließstellung erläutert wird, wird anhand von Fig. 3 der Mechanismus zum Verschieben der Deckel 3 und 4, d.h. die entsprechende Verschiebeeinrichtung 33 näher erläutert.

Die Verschiebeeinrichtung 33 umfaßt das vorstehend bereits angesprochene Antriebskabel 34, das mit einem nicht gezeigten Antriebsmotor verbunden und im Kabelführungskanal 12 der Führungsschiene geführt ist. Unter vorgegebenem gegenseitigen Abstand sind mit dem Antriebskabel 34 bezogen auf die Fahrtrichtung von vorn nach hinten ein vorderer Schlitten, ein mittlerer Schlitten und ein hinterer Schlitten in definiertem Abstand verbunden. Im folgenden sind diese Schlitten wie folgt bezeichnet: Der vordere Schlitten ist als Verschiebeschlitten 35 für den vorderen Deckel 3 bezeichnet, der hintere Schlitten ist als Verschiebeschlitten 37 für den hinteren Deckel 4 bezeichnet, und der dazwischenliegende mittlere Schlitten ist als Verschiebeschlitten 36 für die Schiebekulisse 21 bezeichnet. Jeder der Verschiebeschlitten 35 bzw. 36 und 37 umfaßt ein Basisblechteil (oder -kunststoffteil) 38, 39 bzw. 40, das jeweils am Antriebskabel 34 mit einem seitlichen Ende verankert ist, und dessen anderes Ende jeweils ein Gleitschuhpaar 41, 42 bzw. 43 trägt. Die drei hintereinanderliegenden Gleitschuhpaare 41, 42 und 43 greifen in einen im Querschnitt U-förmigen Gleitschuh-Führungskanal 44 ein, der am innenliegenden Seitenrand der Führungsschiene 9 unterhalb der beiden Ausstellerführungskanäle 15 bzw. 16 angeordnet ist. Da die Verschiebeschlitten 35, 36 und 37 ohnehin durch das Antriebskabel 34 in einem festen Abstand zueinander stehen, können diese alternativ auch durch feste Verbindungselemente verbunden oder als ein einziges Bauteil ausgebildet sein.

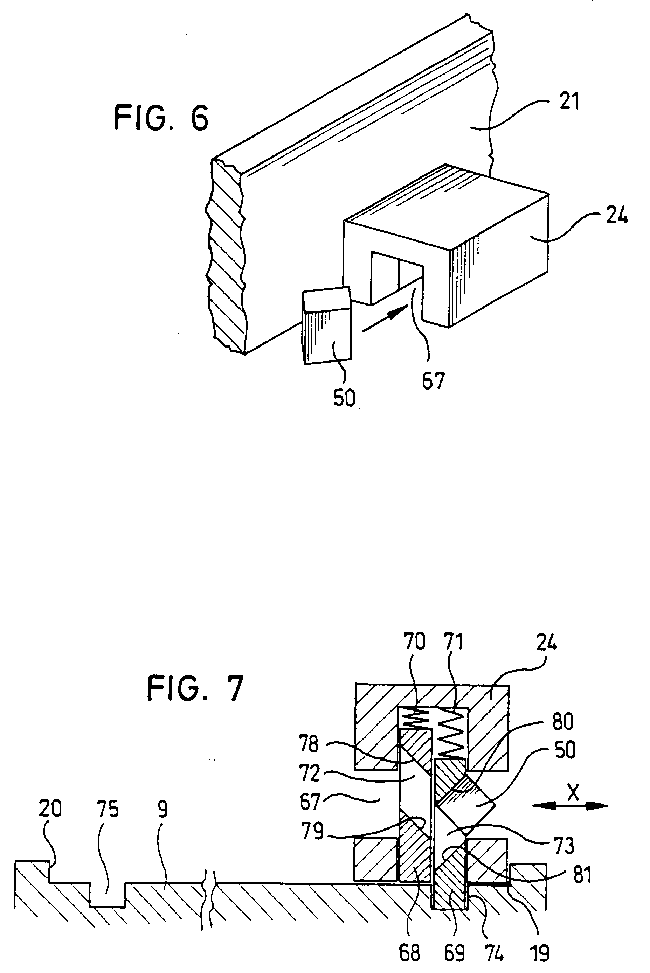

Anschließend an das Antriebskabel 34 sind auf den Oberseiten der Basisblechteile (bzw. -kunststoffteile) 38, 39 bzw. 40 längliche quaderförmige Schlittenführungsteile 45, 46 bzw. 47 fest angebracht. Geführt sind diese Schlittenführungsteile 45, 46 bzw. 47 in dem Schlittenführungskanal 13 der Führungsschiene 9. Das Schlittenführungsteil 45 des Verschiebeschlittens 35 weist im Bereich seines vorderen Endes eine nach oben offene Mitnahmemulde 48 für den Führungsbolzen 29 auf. In ähnlicher Weise weist das hintere Ende des Schlittenführungsteils 47 eine nach oben offene Mitnahmemulde 49 für den Führungsbolzen 30 auf, um, wie nachfolgend erläutert, die Längsverschiebung des vorderen Deckels 3 bzw. des hinteren Deckels 4 zu bewirken. In Richtung auf das Gleitschuhpaar 42 des mittleren Verschiebeschlittens 36 befindet sich neben dem Schlittenführungsteil 46 dieses Schlittens ein Mitnahmeblock 50, der mit dem Antriebsblock 24 der Schiebekulisse 21 mittels des in den Fig. 6 und 7 gezeigten Riegelsteinmechanismus koppelbar ist, wie weiter unten erläutert.

Darüber hinaus sind der vordere und der hintere Verschiebeschlitten 35 bzw. 37 mit Führungsbolzen-Übergabemechanismen ausgestattet, die im ersten Ausführungsbeispiel gemäß Fig. 2 und 3 als schwenkbare Übergabegabeln 51 bzw. 52 ausgebildet sind. Die vordere Übergabegabel 51 ist für den Führungsbolzen 29 und die hintere Übergabegabel 52 ist für den Führungsbolzen 30 bestimmt. Die Übergabegabel 51 ist mit ihrem vorderen Gabelöffnungsende gegenüberliegenden hinteren Ende schwenkverstellbar am Verschiebeschlitten 35 gelagert. Zu diesem Zweck ist das Schwenklagerende der Übergabegabel 51 von einer Welle durchsetzt, welche ihrerseits beidendig zum einen in das der Mitnahmemulde 48 gegenüberliegenden Ende des Schlittenführungsteils 45 und andererseits in ein Schwenklagerteil 53 eingreift, der fest mit dem Basisblechteil (bzw. ―kunststoffteil) 38 des Verschiebeschlittens 35 verbunden ist. Einwärts seitlich vorspringend ist an der Übergabegabel 51 ein stiftförmiger Betätigungsarm 54 angebracht, dessen mit einem Gleitkopf versehenes freies Ende im ersten Ausstellerführungskanal 15 geführt ist.

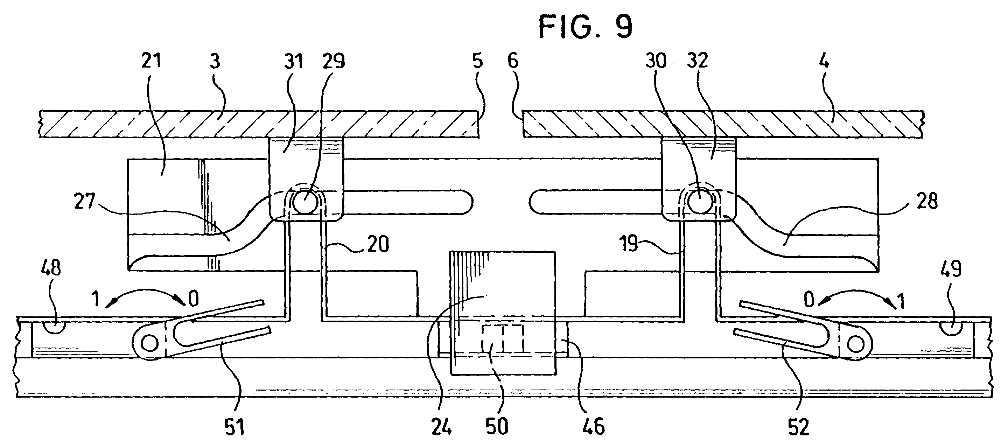

Ein ähnlicher Schwenkverstellungsmechanismus ist für die hintere Übergabegabel 52 vorgesehen: d.h. ein Betätigungsarm 54, der mit seinem Gleitkopfende in den zweiten Ausstellerführungskanal 16 der Führungsschiene 9 eingreift, und ein Schwenklagerteil 55 seitlich beabstandet von demjenigen Ende des Schlittenführungsteils 47, welches der Mitnahmemulde 49 gegenüberliegt. In Fig. 3 sind die Übergabegabeln 51 und 52 in einer um 180° entgegengesetzten Schwenkstellung gezeigt, die eine reine Montagestellung und keine Funktionsstellung darstellt. Bei sich in Schließstellung befindlichen Deckeln 3 und 4 befinden sich die Übergabegabeln 51 bzw. 52, wie in Fig. 9 dargestellt, mit ihren Gabelenden aufeinander zuweisend. Aus dieser Schließstellung (Ausgangsposition) bewegt sich jeweils nur eine der Übergabegabeln 51 bzw. 52, und zwar die des jeweils abzusenkenden Deckels 3 bzw. 4 in eine nach außen weisende Übergabeposition, in der das jeweilige Gabelende den Führungsbolzen 29 bzw. 30 in der zugeordneten Mitnahmemulde 48 bzw. 49 sichert. Die jeweils andere Übergabegabel des nicht abzusenkenden Deckels verbleibt in ihrer Ausgangsposition.

Im folgenden wird der Öffnungsvorgang für den hinteren Deckel 4 stellvertretend für den Öffnungsvorgang der beiden Deckel 3 und 4 erläutert, wobei der Öffnungsvorgang für den vorderen Deckel 3 ähnlich verläuft wie derjenige für den hinteren Deckel 4, jedoch bei entgegengesetzt angetriebenem Antriebskabel 34.

Bei sich in Schließstellung befindlichen Deckeln 3 und 4 durchsetzen deren Führungsbolzen 29 bzw. 30 die erste Steigkulisse 19 bzw. die zweite Steigkulisse 20 im oberen Bereich dieser Steigkulissen und sie greifen in die Führungsnuten 27 und 28 in deren im Wesentlichen horizontal verlaufenden oberen Abschnitte ein. Soll nunmehr der hintere Deckel 4 nach vorne unter den vorderen Deckel 3 verfahren werden, so wird das Antriebskabel 34 in Fahrtrichtung nach vorn bzw. in Richtung vom hinteren zum vorderen Deckel angetrieben und die Schiebekulisse 21 ist mittels eines in Fig. 6 und 7 dargestellten, einen Antriebsblocks 24 und einen Mitnahmeblock 50 umfassenden Riegelsteinmechanismus an den Verschiebeschlitten 36 gekoppelt, welcher deshalb die Schiebekulisse 21 in Antriebsrichtung des Antriebskabels 34 mitnimmt. Bei dieser Mitnahmebewegung der Schiebekulisse 21 läuft der Führungsbolzen 29 des vorderen Deckels 3 entlang seiner Führungsnut 27 in der Schiebekulisse 21 durch den horizontalen Teil in Richtung zur Mitte des Gleitblocks 22. Aufgrund des horizontalen Verlaufs der Führungsbahn 27 in diesem Bereich bleibt dadurch der Bolzen 29 in seiner selben Höhe, so dass der vordere Deckel 3 in seiner Schließposition bleibt. Bei einer alternativen Ausführungsform ist es durch eine entsprechend gestaltete Kulisse 27 möglich, zusätzlich zu einer Absenkbewegung des einen Deckels 4 eine Anhebung des anderen Deckels 3 zu bewirken, um dadurch mehr Platz für das Übereinanderfahren der Deckel zu gewinnen.

Gleichzeitig mit der Bewegung der Schiebekulisse 21 wird die vordere Kante 6 des hinteren Deckels 4 abgesenkt, denn aufgrund der Längsverschiebung der Schiebekulisse 21 der Führungsbolzen 30 am hinteren Deckel 4 wird seine Führungsnut 28 hinunter in Richtung zum offenen hinteren Ende und gleichzeitig in vertikaler Richtung auf das untere offene Ende der ersten Steigkulisse 19 zu bewegt. Bei dieser Absenkbewegung wird der Bolzen 30 vor dem Austreten aus der Steigkulisse 19 von der Übergabegabel 52 aufgenommen. Die Übergabegabel 52 schwenkt den Führungsbolzen 30 um ihre Schwenkachse nach hinten (von der in Fig. 9 mit 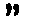 0" in die mit 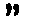 1" bezeichnete Position, so dass das offene gabelförmige Ende der Gabel 52 anschließend nach hinten weist, wobei sich der Führungsbolzen 30 jedoch noch immer im Gabelende befindet. Im Verlauf des weiteren Antriebs des Antriebskabels 34 kommt der Führungsbolzen 30 des hinteren Deckels 6 vollständig frei aus der Führungsnut 28 der Schiebekulisse 21 und gleitet geführt durch die Steigkulisse 19 und zusätzlich durch das gabelförmige Ende der Gabel 52, welches nunmehr angrenzt an die Mitnahmemulde 49, in diese hinein. Bei dieser Übergabebewegung der Übergabegabel 52 erfolgt eine Abkopplung der Schiebekulisse 21 vom Antriebskabel 34 bzw. dem Verschiebeschlitten 36, indem, wie nachfolgend anhand von Fig. 7 und 6 näher erläutert, der Antriebsblock 24 der Schiebekulisse 21 von dem Mitnahmeblock 50 des Verschiebeschlittens 36 entkoppelt wird. Nunmehr liegt ein Zustand vor, bei welchem die vordere Kante 6 des hinteren Deckels 4 maximal abgesenkt ist und der Führungsstift 30 dieses Deckels in der Mitnahmemulde 49 liegt. Ein weiterer Antrieb des Antriebskabels 34 bewirkt nunmehr eine Verschiebung des Führungsbolzens 30 auf identischer Höhe zusammen mit seinem Verschiebeschlitten 37, wodurch der hintere Deckel 6 unter den vorderen Deckel 5 geschoben wird, und zwar gegebenenfalls soweit, bis der hintere Deckel 4 vollständig unter dem vorderen Deckel 5 sowie parallel zu diesem verlaufend zu liegen kommt. Die Übergabegabel 52 fährt dabei mit und sichert den Führungsbolzen 30 zusätzlich in der Mitnahmemulde 49. Die Schwenkbewegungen der Übergabegabel 52 werden durch den Eingriff des Betätigungsarms 54 in den zweiten Ausstellerführungskanal 16 und durch die Anhebung beim Durchlaufen der Kulissenbahn 17A gesteuert. Falls umgekehrt der vordere Deckel 3 für eine Verschiebung unter den hinteren Deckel 4 abgesenkt werden soll, wird dabei die Schwenkbewegung der Übergabegabel 51 durch den Eingriff des Betätigungsarms 54 in den ersten Ausstellerführungskanal 15 und durch die Anhebung beim Durchlaufen der Kulissenbahn 18A gesteuert. Der Betätigungsarm 54 der hinteren Übergabegabel 52 weist eine Kröpfung auf, die es ihm ermöglicht, ohne anzustoßen über die Steigkulisse 18 zu fahren.

Das Schließen des hinteren Deckels 4 gestaltet sich derart, dass das Antriebskabel 34 in entgegengesetzter Richtung, also entgegen der Fahrtrichtung des Fahrzeugs bewegt wird. Sobald der hintere Deckel 4 sich mit seiner vorderen Kante 6 der hinteren Kante 5 des vorderen Deckels 3 nähert, wird die Schiebekulisse 21 über ihren Antriebsklotz 24 und den Mitnahmeblock 50 erneut an das Antriebskabel 45 gekoppelt und mitgenommen. Dabei wird der Führungsbolzen 30 des hinteren Deckels 4 in der Mitnahmemulde 49 seines Verschiebeschlittens 37 mitgenommen. Daraufhin schwenkt die Übergabegabel 52, angetrieben durch den Betätigungsarm 54 und die Kulissenbahn 17A der Hubkulisse 17 nach oben und übergibt den Führungsbolzen 30 in das offene Ende der Steigkulisse 19 sowie in das offene Ende der Führungsnut 28, entlang welcher sowie entlang der Steigkulisse 19 hinauf der Führungsbolzen 30 bewegt wird, bis er schließlich im oberen horizontal verlaufenden Abschnitt der Führungsnut 28 zu liegen kommt, welche Position der vollständigen Schließstellung des hinteren Deckels 4 entspricht.

Soll der vordere Deckel 3 geöffnet, d.h., unter den hinteren Deckel 4 gefahren werden, verläuft der vorstehend für den hinteren Deckel 4 erläuterte Antriebsvorgang in umgekehrter Richtung, ausgehend von den sich in Schließstellung befindlichen Deckeln 3 bzw. 4.

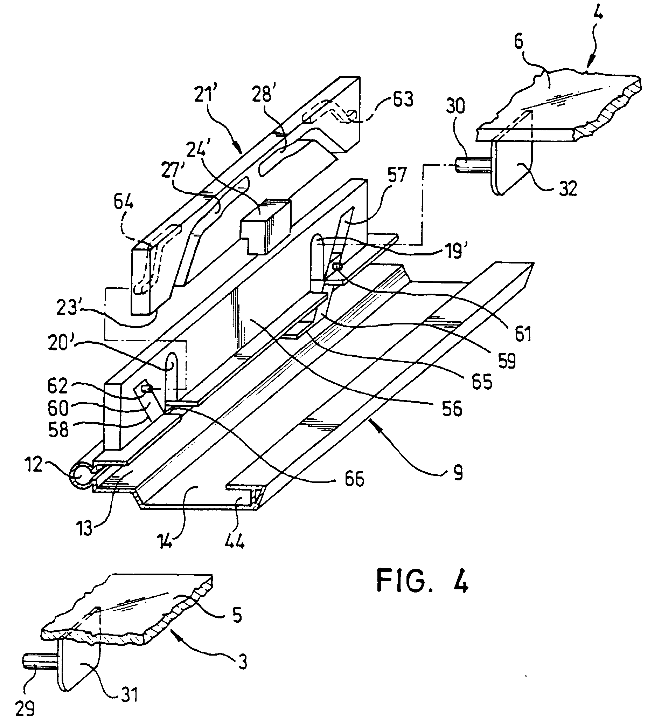

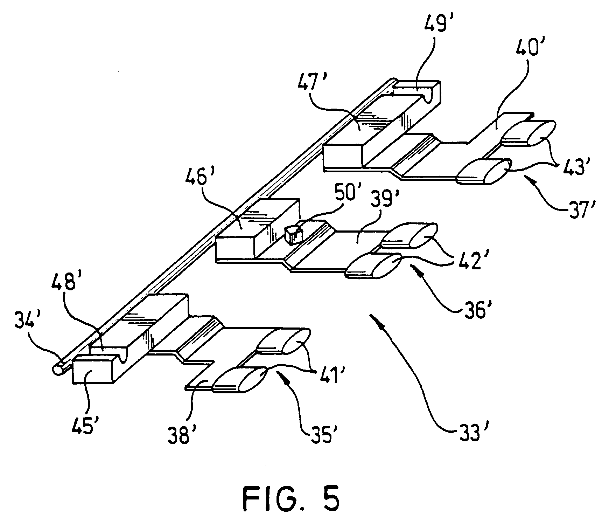

Nunmehr wird anhand von Fig. 4 und 5 eine zweite Ausführungsform des erfindungsgemäß ausgebildeten Antriebsmechanismus für die beiden Deckel 3 und 4 erläutert.

Wie aus Fig. 5 hervorgeht, ist der Verschiebemechanismus gemäß der zweiten Ausführungsform dahingehend in bezug auf den in Fig. 3 gezeigten Verschiebemechanismus der ersten Ausführungsform vereinfacht, dass er zwar dieselben drei Verschiebeschlitten 35, 36 und 37 mit zugehörenden Mitnahmemulden 48 und 49 und zugehörigem Mitnahmeblock 50 aufweist, jedoch nicht den Übergabemechanismus in Form der Übergabegabeln 51 bzw. 52 und ihren für die Anlenkung an die Schlitten erforderlichen Teile. Dieser Übernahmemechanismus ist vielmehr bei der zweiten Ausführungsform zum einen in die Schiebekulisse 21 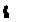 integriert und zum andern zusätzlich zu den Steigkulissen 19 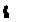 bzw. 20 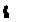 auf der Führungsschiene 9 realisiert. Gleiche Teile in Fig. 4 und 5 zu denjenigen in Fig. 2 und 3 sind mit denselben Bezugsziffern jedoch zusätzlich mit einem Hochkomma ( 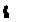 ) bezeichnet.

Aufgrund des einfachen Aufbaus der Verschiebeeinrichtung 33' im Vergleich zu Verschiebeeinrichtung 33 gemäß der ersten Ausführungsform ist der einwärtsliegende Seitenrand der Führungsschiene 9 entsprechend einfacher ohne Ausstellerführungskanäle realisiert; d.h. die Führungsschiene 9 weist am innenliegenden Seitenrand lediglich den Gleitschuh-Führungskanal 44 auf. Im folgenden sind lediglich die im Vergleich zur ersten Ausführungsform gemäß Fig. 2 und 3 unterschiedlichen Teile der zweiten Ausführungsform näher erläutert.

Die Schiebekulisse 21 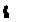 weist wiederum Führungsnuten für die Führungsbolzen 29 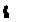 und 30 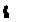 der Deckel 3 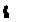 bzw. 4 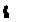 auf. Im Gegensatz zur ersten Ausführungsform sind diese Führungsnuten, die mit 27' und 28' bezeichnet sind, bezüglich ihres Verlaufs modifiziert; d.h., diese Führungsnuten 27 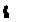 und 28 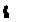 münden nicht in die Stirnseiten der Schiebekulisse 21 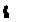 , sondern vor diesen Stirnseiten in die Unterseite der Schiebekulisse 21 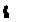 und haben darüber hinaus einen modifizierten Verlauf mit einem ausgehend vom Mündungsende steil ansteigenden Abschnitt, woraufhin sich ein flacher Abschnitt und ein daraufhin leicht ansteigender Abschnitt und zur Mitte hin ein horizontaler Endabschnitt anschließen. Im übrigen wirken die Führungsnuten 27'und 28' mit den Steigkulissen 19 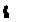 bzw. 20 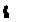 in derselben Weise zusammen wie bei der ersten Ausführungsform. Die Steigkulissen sind bei der in Fig. 4 gezeigten zweiten Ausführungsform mit den Bezugsziffern 19' bzw. 20' bezeichnet und bilden nach oben geschlossene und nach unten offene Sackschlitze innerhalb eines quaderförmigen Blocks 56, der auf der Oberseite des den Schlittenführungskanal 13 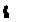 festlegenden Profilteils der Führungsschiene 9 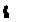 vorgesehen ist, wobei die freien unteren Enden der Steigkulissen 19' und 20' mit Ausnehmungen in der Führungsschiene 9 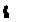 fluchten.

Als Übergabemechanismus ist bei der in Fig. 4 gezeigten Ausführungsform eine Anordnung aus Hubkulissen mit Hubnuten 58 bzw. 57 vorgesehen, die in Fahrtrichtung vor der Steignut 20' bzw. hinter der Steignut 19' angeordnet sind. Die schräg verlaufenden Hubnuten 58 bzw. 57 sind nach oben geschlossen und zur Unterseite des Blocks 56 offen. Diese offene Enden der Hubnuten 57 und 58 fluchten mit Durchbrüchen in der Führungsschiene 9 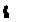 , und in diesen Hubnuten 57 bzw. 58 laufen Hubklötze 59 bzw. 60, von denen seitlich jeweils ein Stift 61 bzw. 62 vorspringt. Die Stifte 61 bzw. 62 sind in einer Nut 63 bzw. 64 geführt sind, die in den beiden Endbereichen der quaderförmigen Schiebekulisse 21 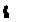 zwischen deren Stirnseiten und den diesbezüglich einwärts liegenden Führungsnuten 27', 28' gebildet sind. Diese Nuten 63 bzw. 64 haben S-Form und erstrecken sich jeweils ansteigend ausgehend von den Stirnseiten der Schiebekulisse 21 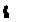 .

Im folgenden wird stellvertretend für beide Deckel 3 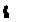 und 4 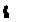 die Öffnungsphase des hinteren Deckels 4 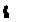 näher erläutert, wobei im übrigen das Verfahren des hinteren Deckels 4 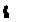 unter den vorderen Deckel 3 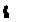 ähnlich verläuft wie vorstehend anhand der ersten Ausführungsform gemäß Fig. 2 und 3 erläutert.

Bei sich in Schließstellung befindlichen Deckeln 3 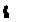 und 4 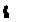 durchsetzen deren Führungsbolzen 29 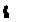 bzw. 30 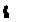 die erste Steigkulisse 19 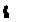 bzw. die zweite Steigkulisse 20 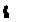 im oberen Bereich dieser Steigkulissen und sie greifen in die Führungsnuten 27 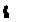 bzw. 28 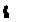 in deren im Wesentlichen horizontal verlaufenden oberen Abschnitte ein. Soll nunmehr der hintere Deckel 4 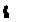 nach vorne unter den vorderen Deckel 3 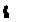 verfahren werden, so wird das Antriebskabel 34 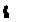 in Fahrtrichtung nach vorn bzw. in Richtung vom hinteren Deckel 4 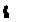 zum vorderen Deckel 3 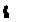 angetrieben und die Schiebekulisse 21 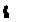 ist mittels eines in Fig. 6 und 7 dargestellten, einen Antriebsblocks 24 und einen Mitnahmeblock 50 umfassenden Riegelsteinmechanismus an den Verschiebeschlitten 36 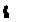 gekoppelt, welcher deshalb die Schiebekulisse 21 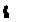 in Antriebsrichtung des Antriebskabels 34 mitnimmt. Bei dieser Mitnahmebewegung der Schiebekulisse 21 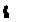 läuft der Führungsbolzen 29 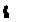 des vorderen Deckels 3 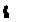 entlang seiner Führungsnut 27 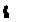 in der Schiebekulisse 21 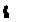 durch den horizontalen Teil in Richtung zur Mitte des Gleitblocks 22 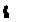 . Zu Beginn einer Bewegung des Antriebskabels 34 ausgehend von sich in vollständiger Schließstellung befindlichen Deckeln 3 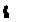 und 4 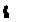 läuft der Führungsbolzen 30 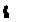 in der Führungsnut 28' und in der Steigkulisse 19 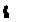 hinunter. Sobald der Führungsbolzen 30 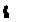 das offene Ende der Steigkulisse 19 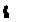 erreicht, gelangt er in Eingriff mit einem parallel zur Führungsschiene 9 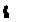 verlaufenden Tragteil 65, das die Ausnehmung in der Führungsschiene 9 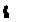 in dieser Stellung verschließt. Bei einer weiteren Antriebsbewegung des Antriebskabels 34 läuft der Stift 61 des Hubklotzes 59 die abfallende Bahn der S-förmigen Nut 63 hinunter, wodurch das Tragteil 65 unter den Durchbruch in der Führungsschiene abgesenkt wird, bis unmittelbar über die Mitnahmemulde 49 im Schlitten 37, so dass sichergestellt ist, dass bei einem weiteren Antrieb des Antriebkabels 34 der Führungsbolzen 30 sauber in die Mitnahmemulde 49 überführt wird. Daraufhin gestaltet sich das weitere Verfahren des hinteren Deckels 4 wie vorstehend anhand der ersten Ausführungsform gemäß Fig. 2 und 3 erläutert. Im umgekehrten Fall, beim Überführen des hinteren Deckels 4 in seine Schließstellung wird der Führungsbolzen 30 bei unmittelbar an die Mitnahmemulde 49 angrenzendem Tragteil 65 auf dessen Oberseite überführt und zusammen mit dem Hubklotz 59 in das Öffnungsende der Steigkulisse 19 bzw. der Führungsnut 28' überführt.
Beim anschließenden Verfahren der Schiebekulisse 21 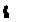 wird das Anheben der Vorderkante 6 des hinteren Deckels 4 und optional das Absenken der hinteren Kante 5 des vorderen Deckels 3 vom Hubklotz 60, den Nuten 63 bzw. 64 sowie den Führungsnuten 27 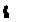 bzw. 28 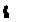 gesteuert.

Anhand von Fig. 6 und 7 wird nunmehr der Kupplungsmechanismus zum An- und Abkoppeln der Schiebekulisse 21 an das Antriebskabel 34 erläutert.

In Fig. 6 ist die Schiebekulisse 21 rein schematisch und verkleinert in bezug auf ihren Antriebsblock 24 dargestellt. Dargestellt ist außerdem getrennt von dem in Fig. 3 bzw. 5 gezeigten Verstellmechanismus der in der Draufsicht rautenförmige Mitnahmeblock 50, der zur Kopplung und Entkopplung mit dem Antriebsblock 24 bestimmt ist. Dieser Kopplungsvorgang sowie die Kopplung relativ zur Führungsschiene ist in Fig. 7 näher gezeigt, die rein schematisch die Führungsschiene 9 mit den Steigkulissen 19 und 20 zeigt, die gleichzeitig als Anschläge für den Antriebsblock 24 dienen. Demnach hat der Antriebsblock 24 einen tunnelförmigen Durchgangskanal 67 parallel zur Längsrichtung der Führungsschiene 9. Im Innern des auch quer zum Durchgangskanal 67 hohl ausgebildeten Antriebsblocks 24 befinden sich zwei Riegel 68 und 69, die in seitlicher Anlage aneinander sowie an Innenwänden des Antriebsblocks 24 geführt sowie in ihrer Richtung senkrecht zur Führungsschiene 9 mittels Federn 70 bzw. 71 vorgespannt sind. Die beiden Riegel 68 bzw. 69 sind jeweils von einer Durchgangsöffnung 72 bzw. 73 in Querrichtung durchsetzt, die jeweils antiparallel zueinander schräg verlaufen. Das heißt, die Durchgangsöffnung 72 verläuft in der Zeichnung ansteigend von rechts nach links, während die Durchgangsöffnung 73 von links nach rechts ansteigend verläuft. Die Durchgangsöffnungen 72 bzw. 73 sind so bemessen, dass der Mitnahmeblock 50 für die Schiebekulisse 21 in sie ein- bzw. hindurchtreten kann. Sie weisen einander gegenüberliegende Funktionsflächen 78 bzw. 79 ( an der Durchgangsöffnung 72) und 80 bzw. 81 ( an der Durchgangsöffnung 73) für das Zusammenwirken mit dem Mitnahmeblock 50 auf.

Die Funktion des in Fig. 7 gezeigten Mechanismus ist wie folgt: In der in Fig. 7 gezeigten verriegelten Endposition liegt die Schiebekulisse 21 an der einen Anschlag bildenden Steigkulisse 19 an und der Riegel 69 wird von seiner Feder 71 in eine Aussparung 74 in der Führungsschiene 9 gedrückt. Läuft nunmehr, wie in Fig. 7 gezeigt, der Mitnahmeblock 50 durch eine Antriebsbewegung des Antriebskabels 34 in den Durchgangskanal 67 des Antriebsblocks 24(ausgehend von der in der Zeichnung rechten Seite), stößt dieser Block am Riegel 71, d.h. an seiner auf der Seite der Feder 71 liegenden Funktionsfläche 80 an, schiebt ihn in Richtung der Feder 71 zur Seite und entkoppelt dadurch den Antriebsblock 24 von der Führungsschiene 9. Daraufhin stößt der Mitnahmeblock 50 an der der Feder 70 fernliegenden Funktionsfläche 79 des Riegels 68 an, den er aufgrund der Anlage von dessen Stirnseite an der Führungsschiene 9 nicht beiseite stoßen kann. In dieser Stellung ist die Schiebekulisse 21 ausschließlich mit dem einen Kulissenbetätiger bildenden Mitnahmeblock 50 des Verschiebeschlittens 36 verbunden und wird von diesem Mitnahmeblock 50 mitgenommen. In dieser Stellung ist außerdem sichergestellt, dass der Mitnahmeblock 50 sich nicht von der Schiebekulisse 21 trennen kann, bevor die Schiebekulisse 21 nicht erneut mit der Führungsschiene 9 verriegelt wird. Das bedeutet, dass es keine undefinierte und damit unsichere Lage der Schiebekulisse 21 gibt. Nunmehr nimmt der Mitnahmeblock 50 und der damit gekoppelte Antriebsblock 24 die Schiebekulisse 21 in Verschieberichtung X bis in ihre andere Endposition mit, in welcher diese gegen die einen Anschlag bildende Steigkulisse 20 anstößt. Da sich der Mitnahmeblock 50 weiterbewegen will, drückt er den Riegel 68 mittels der Funktionsfläche 79 in eine Aussparung 75 in der Führungsschiene 9. Die Schiebekulisse 21 ist damit erneut fest mit der Führungsschiene 9 verbunden und der einen Kulissenbetätiger bildende Mitnahmeblock 50 ist von der Schiebekulisse 21 erneut gelöst, weil er nach Verschieben des Riegels 68 in die Aussparung 75 in der Fig. 7 nach links aus dem Durchgangskanal 67 austreten kann. Nach der Verriegelung der Schiebekulisse 21 mit der Führungsschiene 9 fährt die Verschiebeeinrichtung 33 losgelöst von der Verschiebekulisse 21 weiter.

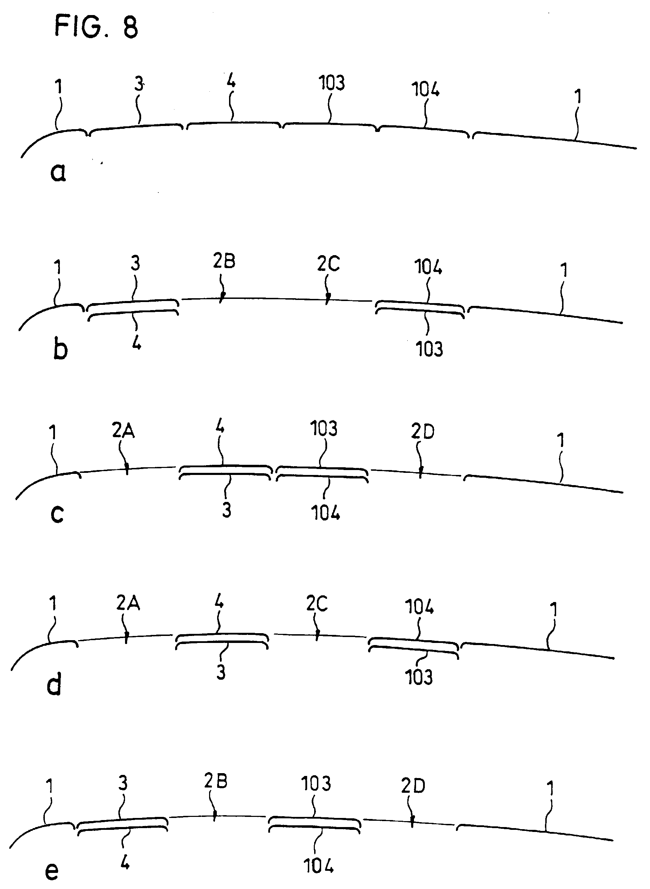

Wie in den Figuren 8a bis 8e verdeutlicht, können statt der in den bisherigen Ausführungsbeispielen erläuterten zwei Deckel 3 bzw. 4 mittels des erfindungsgemäß ausgebildeten Betätigungsmechanismus auch mehrere Dachteile bewegt werden. So ist in Fig. 8a ein Fahrzeugdach dargestellt, bei dem in einem festen Fahrzeugdach 1 insgesamt 4 Deckelteile 3, 4, 103 und 104 hintereinander angeordnet eine große Dachöffnung (2A bis 2D) verschließen.

Dabei sind die beiden vorderen Deckel 3 und 4 durch einen der in den Fig. 2, 3 und 9 bzw. den Fig. 4 und 5 erläuterten Antriebsmechanismen miteinander gekoppelt. Ebenso sind die beiden hinteren Deckel 103 und 104 durch einen solchen Antriebsmechanismus miteinander gekoppelt. Die Betätigung des Antriebsmechanismus für die vorderen Deckel 3 bzw. 4 erfolgt durch einen ersten Antrieb, der beispielsweise im Bereich des vorderen festen Daches 1 angeordnet sein kann.

Die Betätigung der beiden hinteren Deckel 103 und 104 erfolgt durch einen zweiten Antrieb über einen zweiten Satz von Antriebskabeln, wobei dieser Antrieb beispielsweise im Bereich des hinteren festen Daches 1 angeordnet sein kann.

Wie aus den Fig. 8b bis 8e hervorgeht, ergeben sich hierdurch eine Vielzahl von möglichen Öffnungsvarianten für das Fahrzeugdach. So ist in Fig. 8b der Deckel 4 unter den davor liegenden Deckel 3 gefahren und gleichzeitig der Deckel 103 unter den dahinter angeordneten Deckel 104 gefahren. Die Deckel 4 und 103 geben dabei Dachöffnungen 2B bzw. 2C frei, die ― wie im Ausführungsbeispiel gezeigt ― vorzugsweise unmittelbar ineinander übergehen, jedoch auch optional durch ein nicht dargestelltes, dazwischen angeordnetes quer verlaufendes Festelement von einander getrennt sein können.

In der Fig. 8c ist der Deckel 3 unter den dahinter liegenden Deckel 4 gefahren, während der Deckel 104 unter den davor liegenden Deckel 103 gefahren ist. In dieser Öffnungsvariante wird durch den Deckel 3 eine vordere Dachöffnung 2A und durch den hinteren Deckel 104 eine hinten liegende Dachöffnung 2D freigegeben.

Bei der Öffnungsvariante gemäß Fig. 8d ist der vordere Deckel 3 unter den dahinter liegenden Deckel 4 gefahren und der Deckel 103 unter den hinten liegenden Deckel 104 gefahren. Dabei gibt der Deckel 3 eine vordere Dachöffnung 2A und der Deckel 103 eine Dachöffnung 2C frei.

Schließlich ist in Fig. 8e der Deckel 4 nach vorne unter den Deckel 3 und der Deckel 104 nach vorne unter den Deckel 103 gefahren. Dabei gibt der Deckel 4 eine Dachöffnung 2B und der Deckel 104 eine Dachöffnung 2D im hinteren Teil des Fahrzeugdachs frei.

Durch die Vielfalt von Öffnungsvarianten läßt sich für jedes Fahrzeugdach auch bei mehreren Sitzreihen eine optimale Belüftung des Fahrzeuginnenraums einstellen.

### Bezugszeichenliste

- 1: Dachhaut
- 2, 2A-D: Dachöffnung
- 3, 103: vorderer Deckel
- 4, 104: hinterer Deckel
- 5: hintere Kante von 3
- 6: vordere Kante von 4
- 7: vordere Kante von 3
- 8: hintere Kante von 4
- 9: Führungsschiene
- 10: vordere Endkulisse
- 11: hintere Endkulisse
- 12: Kabelführungskanal
- 13: Schlittenführungskanal
- 14: Führungsschienenboden
- 15: erster Ausstellerführungskanal
- 16: zweiter Ausstellerführungskanal
- 17: erste Hubkulisse
- 18: zweite Hubkulisse
- 17A, 18A: Kulissenbahnen
- 19: erste Steigkulisse
- 20: zweite Steigkulisse
- 21: Schiebekulisse
- 22: Gleitblock
- 23: Gleitfläche
- 24: Antriebsblock
- 25: vorderes Schiebekulissenende
- 26: hinteres Schiebekulissenende
- 27: vordere Führungsnut
- 28: hintere Führungsnut
- 29: Führungsbolzen an 3
- 30: Führungsbolzen an 4
- 31: Halterungslasche von 29
- 32: Halterungslasche von 30
- 33: Verschiebeeinrichtung
- 34: Antriebskabel
- 35: Verschiebeschlitten für 3
- 36: Verschiebeschlitten für 21
- 37: Verschiebeschlitten für 4
- 38: Basisblechteil für 35
- 39: Basisblechteil für 36
- 40: Basisblechteil für 37
- 41: Gleitschuhpaar von 38
- 42: Gleitschuhpaar von 39
- 43: Gleitschuhpaar von 40
- 44: Gleitschuh-Führungskanal
- 45: Schlittenführungsteil von 35
- 46: Schlittenführungsteil von 36
- 47: Schlittenführungsteil von 37
- 48: Mitnahmemulde für 29
- 49: Mitnahmemulde für 30
- 50: Mitnahmeblock für 24
- 51: Übergabegabel für 29
- 52: Übergabegabel für 30
- 53: Schwenklagerteil
- 54: Betätigungsarm
- 55: Schwenklagerteil
- 56: Block
- 57: Hubnut hinten
- 58: Hubnut vorn
- 59: Hubklotz hinten
- 60: Hubklotz vorn
- 61: Stift von 59
- 62: Stift von 60
- 63: Nut hinten für 61
- 64: Nut vorn für 62
- 65: Tragteil von 59
- 66: Tragteil von 60
- 67: Durchgangskanal
- 68: Riegel
- 69: Riegel
- 70: Feder
- 71: Feder
- 72: Durchgangsöffnung
- 73: Durchgangsöffnung
- 74: Aussparung in 9
- 75: Aussparung in 9
- 76: Führungsbolzen von 3 vorn
- 77: Führungsbolzen von 4 hinten
- 78: Funktionsfläche von 68
- 79: Funktionsfläche von 68
- 80: Funktionsfläche von 69
- 81: Funktionsfläche von 69

## Patentansprüche

1. Fahrzeugdach mit wenigstens einer in einer festen Dachhaut (1) ausgebildeten Dachöffnung (2, 2A, 2B, 2C bzw. 2D), in welcher wenigstens zwei Deckel (3 und 4 bzw. 103 und 104) in einer die Dachöffnungen (2, 2B, 2B, 2C, und 2D) verschließenden Schließstellung bündig hinter einander angeordnet und in eine die Dachöffnungen (2, 2A, 2B, 2C und 2D) teilweise frei gebende erste Öffnungsstellung einander zumindestens teilweise überlappend verschiebbar sind, in welcher ersten Öffnungstellung wenigstens einer von zwei benachbarten Deckeln (4 bzw. 104) zumindest teilweise unter dem anderen Deckel (3 bzw. 103) zu liegen kommt, **dadurch gekennzeichnet**, dass wechselweise jeweils nur einer von zwei benachbarten, durch eine gemeinsame Mechanik verbundenen Deckeln (3, 4 bzw. 103, 104) bei feststehendem benachbarten Deckel (4, 3 bzw. 104, 103) zumindestens teilweise unter diesen verschiebbar ist.

2. Fahrzeugdach nach Anspruch 1, **dadurch gekennzeichnet**, dass zur Betätigung zweier benachbarter Deckel (3 und 4 bzw. 103 und 104) jeweils ein gemeinsamer Antriebsmechanismus vorgesehen ist.

3. Fahrzeugdach nach Anspruch 2, **dadurch gekennzeichnet**, dass jeder der zwei benachbarten Deckel (3 und 4 bzw. 103 und 104) im Bereich seiner vom anderen Deckel (4 und 3 bzw. 104 und 103) in Schließstellung entfernt liegenden Querkante (7 bzw. 8) in zwei seitlichen Führungsschienen (9) im Bereich der Dachöffnungslängsseiten schwenkbar geführt ist, dass jeder Deckel (3 und 4 bzw. 103 und 104) im Bereich seiner anderen Querkante (5 bzw. 6) pro Führungsschiene (9) in einer einen Teil des Antriebsmechanismus bildenden, für beide Deckel (3, 4 bzw. 103, 104) gemeinsamen Schiebekulisse (21) zur Hubverstellung dieser Querkantenbereiche relativ zueinander geführt ist, und dass eine ebenfalls einen Teil des Antriebsmechanismus bildende Verschiebeeinrichtung (33) für den aus der Schiebekulisse (21) freigekommenen, abgesenkten Deckel (3 und 4 bzw. 103 und 104) vorgesehen ist, um diesen unter den feststehenden Deckel (4 und 3 bzw. 104 und 103) zu verschieben.

4. Fahrzeugdach nach Anspruch 3, **dadurch gekennzeichnet,** dass die Schiebekulisse (21) zwei zu ihrer Längsmitte hin ansteigend verlaufende Führungsnuten (27 und 28) aufweist, in welche Führungsbolzen (29 bzw. 30) eingreifen, die im Bereich der hubverstellbaren Querkanten (5 bzw. 6) der Deckel (3 und 4; bzw. 103 und 104) an diesen fest angebracht sind.

5. Fahrzeugdach nach Anspruch 4, **dadurch gekennzeichnet,** dass die Führungsnuten (27 und 28) S-förmig oder rampenförmig ausgebildet sind, wobei die Führungsbolzen (29 und 30) bei sich in Schließstellung befindlichen Deckeln (3 und 4 bzw. 103 und 104) im Bereich eines oberen horizontalen Abschnitts der Führungsnuten (27 bzw. 28) zu liegen kommen.

6. Fahrzeugdach nach Anspruch 4, **dadurch gekennzeichnet**, dass die Führungsnuten (27 und 28) S-förmig ausgebildet sind, wobei die Führungsbolzen (29 bzw. 30) bei sich in Schließstellung befindlichen Deckeln (3 und 4 bzw. 103 und 104) im Bereich des Wendepunkts bzw. eines rampenförmigen Anstiegs der S-förmigen Führungsnuten (27 und 28) zu liegen kommen, so dass die zum eine Verschiebebewegung ausführenden Deckel (3 oder 4 bzw. 103 oder 104) weisende Querkante (5 bzw. 6) des feststehenden Deckels (4 bzw. 3; 104 bzw. 103) mit Beginn dieser Verschiebebewegung eine angehobene Stellung einnimmt.

7. Fahrzeugdach nach einem der Ansprüche 4 bis 6, **dadurch gekennzeichnet**, dass jeder Führungsnut (27 bzw. 28) eine fest mit der Führungsschiene (9) verbundene Steigkulisse (19 bzw. 20) mit einer in etwa vertikalen und zur Verschiebeeinrichtung (33) offenen Steignut zugeordnet ist.

8. Fahrzeugdach nach einem der Ansprüche 4 bis 7, **dadurch gekennzeichnet**, dass die Verschiebeeinrichtung (33) pro Deckel (3 und 4 bzw. 103 und 104) einen fest mit einem Antriebskabel (34) verbunden Schlitten (35 bzw. 37) mit einer Mitnahmemulde (48 bzw. 49) für den jeweiligen Führungsbolzen (29 bzw. 30) aufweist.

9. Fahrzeugdach nach Anspruch 7 oder 8, **dadurch gekennzeichnet**, dass eine Übergabeeinrichtung zur Übergabe des aus der Führungsnut (27 bzw. 28) der Schiebekulisse (21) bzw. der Steignut der Steigkulisse (19 bzw. 20) freikommenden Führungsbolzens (29 bzw. 30) auf die Verschiebeeinrichtung (33) vorgesehen ist, die in jedem Punkt der Bewegung eine definierte Position der Führungsbolzen (29 bzw. 30) gewährleistet.

10. Fahrzeugdach nach Anspruch 9, **dadurch gekennzeichnet**, dass die Übergabeeinrichtung eine parallel zum Führungsbolzen (29 bzw. 30) schwenkbar an der Verschiebeeinrichtung (33) angelenkte Übergabegabel (51 bzw. 52) umfaßt, in welcher der Führungsbolzen (29 bzw. 30) aufgenommen wird, bevor er die Führungsnut (27 bzw. 28) der Schiebekulisse (21) bzw. die Steignut der Steigkulisse (19 bzw. 20) verläßt, und welche die Übergabe des Führungsbolzens an die Verschiebeeinrichtung kinematisch sicherstellt.

11. Fahrzeugdach nach Anspruch 9, **dadurch gekennzeichnet**, dass die Übergabeeinrichtung ein Hubelement (59 bzw. 60) aufweist, das den die Führungsnut (27' bzw. 28') der Schiebekulisse (21 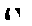 ) bzw. die Steignut der Steigkulisse (19' bzw. 20') verlassenden Führungsbolzen (29 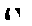 bzw. 30 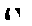 ) stützt und sich zur Übergabe des Führungsbolzens (29 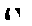 bzw. 30 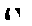 ) auf eine Mitnahmemulde (48 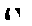 bzw. 49 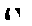 ) der Verschiebeeinrichtung (33 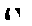 ) über sowie vor diese Mitnahmemulde gesteuert durch eine Hubkulisse absenkt, welche durch eine Nut (63 bzw. 64) in der Schiebekulisse (21) betätigt ist. (Fig. 5).

12. Fahrzeugdach nach einem der Ansprüche 3 bis 11, **dadurch gekennzeichnet**, dass eine Kupplungseinrichtung (Blöcke 24 und 50) vorgesehen ist, um die Schiebekulisse (21) im aktiven Zustand, in welchem sie in Kontakt mit dem zu verschiebenden Deckel (3, 4) steht, mit der Verschiebeeinrichtung (33) zu koppeln und in ihrem passiven Zustand, in welchem sie von diesem Deckel (3, 4, 103 bzw. 104) getrennt ist, mit der Führungsschiene (9) zu koppeln.

13. Fahrzeugdach nach Anspruch 12, **dadurch gekennzeichnet**, dass die Kupplungseinrichtung (Blöcke 24 und 50) einen Riegelsteinmechanismus aufweist, der federbelastete Riegel (68 und 69) mit besonderen Funktionsflächen (78, 79, 80 und 81) umfaßt.
